# EUROPEAN PATENT SPECIFICATION

(11) **EP 3 225 510 B1**
(45) Date of publication and mention of the grant of the patent: **02.09.2020**
(21) Application number: 16197457.1
(22) Date of filing: 07.11.2016
(51) Int. Cl.: B62D 15/02, B62K 11/00, B62H 3/00, E04H 6/42, G08G 1/00

(54) **METHODS AND DEVICES FOR CONTROLLING SELF-BALANCED VEHICLE TO PARK**
VERFAHREN UND VORRICHTUNGEN ZUR STEUERUNG EINES SELBST BALANCIERTEN FAHRZEUGS ZUM PARKEN
PROCÉDÉS ET DISPOSITIFS DE GESTION DE VÉHICULE AUTO-ÉQUILIBRÉ

(30) Priority: 29.03.2016 CN 201610188056
(43) Date of publication of application: 04.10.2017
(73) Proprietor: Beijing Xiaomi Mobile Software Co., Ltd., Beijing 100085 (CN)
(72) Inventor: QIAN, Zhuang, BEIJING (CN); XIANGLI, Fei, BEIJING (CN); CHEN, Baoke, BEIJING (CN)
(74) Representative: Cabinet Beau de Loménie

(56) References cited:
- WO-A1-2015/193059
- CN-A- 105 116 817
- CN-A- 105 223 952
- US-A1- 2004 050 611
- US-A1- 2014 036 076
- US-A1- 2016 019 790

## Description

### TECHNICAL FIELD

The present disclosure generally relates to the field of smart transportation means, and more particularly, to methods and devices for controlling a self-balanced vehicle to park.

### BACKGROUND

A self-balanced vehicle is a newly emerged short-distance transportation means. The self-balanced vehicle can achieve self-balance and can travel forward/backward and turn a direction by utilizing an electrical motor and a balancing device. If the self-balanced vehicle does not operate for a while, the self-balanced vehicle can be turned off automatically, to save electrical power. When the self-balanced vehicle is turned off automatically and has nothing to lean on, the self-balanced vehicle can lose self-balance and fall down, causing physical damage to the self-balanced vehicle.

In the related art, the self-balanced vehicle can emit sound or light and the like as a warning signal when the self-balanced vehicle is turned off automatically, to prompt a user nearby to manually put the self-balanced vehicle in a proper place. The sound or light emitted by the self-balanced vehicle can cause interference to other people around, especially when the self-balanced vehicle is in a small space, the sound or light emitted by the self-balanced vehicle can cause noise pollution. This results in poor user experience. In addition, since the self-balanced vehicle requires a user to assist the self-balanced vehicle to park, when there is no one around or no one can reach the self-balanced vehicle in proper time, the self-balanced vehicle will fall down. The document US 2014/036076 discloses a method and a device for controlling a vehicle to park corresponding with the preamble of claims 1 and 6. The document CN 105 116 817 discloses controlling a self-balanced vehicle in connection with a camera.

### SUMMARY

In order to solve the problem in the related art, embodiments of the present disclosure provide methods and devices for controlling a self-balanced vehicle to park, which can cause the self-balanced vehicle to automatically park when the self-balanced vehicle is turned off.

According to a first aspect of embodiments of the present disclosure, there is provided a method for controlling a self-balanced vehicle to park, which is applied on the self-balanced vehicle. The method includes the followings steps:
sending a message of requesting for parking assistance to a surveillance camera device for controlling the self-balanced vehicle to park;
receiving a first response message which is returned from the surveillance camera device according to the message of requesting for parking assistance, the first response message carrying parking instruction information for controlling the self-balanced vehicle to travel from a current location to a target location; and
controlling the self-balanced vehicle to travel from the current location to the target location and to park according to the parking instruction information.

Before the step of sending a message of requesting for parking assistance
to a surveillance camera device for controlling the self-balanced vehicle to park, the method includes the following step:
determining whether there is a surveillance camera device that can establish a preset type of short-distance communication connection with the self-balanced vehicle; and
if there is a surveillance camera device that can establish a preset type of short-distance communication connection with the self-balanced vehicle, determining whether the surveillance camera device can control the self-balanced vehicle to park;
wherein determining whether the surveillance camera device can control the self-balanced vehicle to park can include:
   determining whether the surveillance camera device has permission to control the self-balanced vehicle to park by searching a preset control list for recording surveillance camera devices which have permission to control the self-balanced vehicle to park;
   if it is determined that the surveillance camera device has permission to control the self-balanced vehicle to park, sending an inquiry message to a surveillance camera device, the inquiry message being for inquiring of the surveillance camera device about whether the surveillance camera device can control the self-balanced vehicle to park;
   receiving a second response message which is returned by the surveillance camera device according to the inquiry message, the second response message carrying a complexity degree of controlling the self-balanced vehicle to park; and
   if the complexity degree is smaller than a preset complexity threshold, determining that the surveillance camera device can control the self-balanced vehicle to park.

In an embodiment, the method can further include the following steps:
if there are two or more surveillance camera devices which have permission to control the self-balanced vehicle to park, determining a complexity degree for each of the two or more surveillance camera devices;
determining a surveillance camera device corresponding to a minimum value of the complexity degrees of the two or more surveillance camera devices as the surveillance camera device for controlling the self-balanced vehicle to park, and performing the step of sending a message of requesting for parking assistance to the surveillance camera device.

In an embodiment, the step of controlling the self-balanced vehicle to travel from the current location to the target location and to park according to the parking instruction information can include:
determining a travelling route from the current location to the target location according to the parking instruction information; and
controlling the self-balanced vehicle to travel to the target location and to park according to the travelling route.

In an embodiment, the method can further include the following steps:
determining whether the self-balanced vehicle has arrived at the target location; and
after it is determined that the self-balanced vehicle has arrived at the target location, controlling the self-balanced vehicle to adjust posture such that the self-balanced vehicle can park at the target location.

In an embodiment, the method can further include the following steps:
determining whether a location requesting message sent from the surveillance camera device is received; and
if a location requesting message sent from the surveillance camera device is received, generating a location indication signal for indicating the current location of the self-balanced vehicle, the location indication signal being an acoustic signal and/or an optical signal.

According to a second aspect of embodiments of the present disclosure, there is provided a method for controlling a self-balanced vehicle to park, which is applied on a surveillance camera device. The method can include the followings steps:
receiving a message of requesting for parking assistance sent from a self-balanced vehicle to be parked;
determining a current location of the self-balanced vehicle and a target location of the self-balanced vehicle;
according to the current location of the self-balanced vehicle and the target location of the self-balanced vehicle, generating parking instruction information for controlling the self-balanced vehicle to travel from the current location to the target location; and
sending a first response message to the self-balanced vehicle, the first response message carrying the parking instruction information such that the self-balanced vehicle can park according to the parking instruction information.

In an embodiment, the step of determining a current location of the self-balanced vehicle can include:
determining whether a current surveillance image of the surveillance camera device presents the self-balanced vehicle;
if the current surveillance image presents the self-balanced vehicle, determining the current location of the self-balanced vehicle according to the current surveillance image;
if the current surveillance image does not present the self-balanced vehicle, controlling an image capturing apparatus of the surveillance camera device to rotate within a preset range, and to stop rotating when a target surveillance image presenting the self-balanced vehicle is captured; and
determining the current location of the self-balanced vehicle according to the target surveillance image.

In an embodiment, the step of determining a target location of the self-balanced vehicle can include:
determining whether a current surveillance image of the surveillance camera device presents a target parking spot for the self-balanced vehicle to park;
if the current surveillance image presents a target parking spot for the self-balanced vehicle to park, determining the target location of the self-balanced vehicle according to the target parking spot in the current surveillance image;
if the current surveillance image does not present a target parking spot for the self-balanced vehicle to park, controlling an image capturing apparatus of the surveillance camera device to rotate within a preset range, and to stop rotating when a target surveillance image presenting a target parking spot is captured; and
determining the target location of the self-balanced vehicle according to the target surveillance image.

In an embodiment, the step of determining a current location of the self-balanced vehicle can include:
sending a location requesting message to the self-balanced vehicle;
when the self-balanced vehicle generates a location indication signal according to the location requesting message, controlling a signal capturing apparatus of the surveillance camera device to capture the location indication signal, the location indication signal being an acoustic signal and/or an optical signal; and
determining the current location of the self-balanced vehicle according to the location indication signal.

In an embodiment, the method can further include the following steps:
receiving an inquiry message sent from the self-balanced vehicle, the inquiry message being for inquiring of the surveillance camera device about whether the surveillance camera device can control the self-balanced vehicle to park;
according to the inquiry message, determining whether the surveillance camera device can determine a current location of the self-balanced vehicle and a target location of a target parking spot for the self-balanced vehicle to park;
if it is determined that the surveillance camera device can determine a current location of the self-balanced vehicle and a target location of a target parking spot for the self-balanced vehicle to park, determining a complexity degree of controlling the self-balanced vehicle to park; and
sending a second response message to the self-balanced vehicle, the second response message carrying the complexity degree of controlling the self-balanced vehicle to park.

In an embodiment, the step of determining a target location of the self-balanced vehicle can include:
if the surveillance camera device searches out more than one target parking spot for the self-balanced vehicle to park, determining a target parking spot corresponding to a minimum value of the complexity degrees of controlling the self-balanced vehicle to park as the target parking spot for the self-balanced vehicle to park, and determining the target location according to the target parking spot.

According to a third aspect of embodiments of the present disclosure, there is provided a device for controlling a self-balanced vehicle to park, which is applied on the self-balanced vehicle. The device includes:
a first sending module configured to send a message of requesting for parking assistance to a surveillance camera device for controlling the self-balanced vehicle to park;
a first receiving module configured to receive a first response message which is returned from the surveillance camera device according to the message of requesting for parking assistance sent by the first sending module, the first response message carrying parking instruction information for controlling the self-balanced vehicle to travel from a current location to a target location; and
a first controlling module configured to control the self-balanced vehicle to travel from the current location to the target location and park according to the parking instruction information in the first response message received by the first receiving module.

The device further includes:
a searching module configured to determine whether there is a surveillance camera device that can establish a preset type of short-distance communication connection with the self-balanced vehicle; and
a first determining module configured to, if the searching module determines that there is a surveillance camera device that can establish a preset type of short-distance communication connection with the self-balanced vehicle, determine whether the surveillance camera device can control the self-balanced vehicle to park;
wherein the first determining module includes:
   a searching sub-module configured to, if the searching module determines that there is a surveillance camera device that can establish a preset type of short-distance communication connection with the self-balanced vehicle, determine whether the surveillance camera device has permission to control the self-balanced vehicle to park by searching a preset control list for recording surveillance camera devices which have permission to control the self-balanced vehicle to park;
   a first sending sub-module configured to, if the searching sub-module determines that the surveillance camera device has permission to control the self-balanced vehicle to park, send an inquiry message to a surveillance camera device, the inquiry message being for inquiring of the surveillance camera device about whether the surveillance camera device can control the self-balanced vehicle to park;
   a receiving sub-module configured to receive a second response message which is returned by the surveillance camera device according to the inquiry message sent by the first sending sub-module, the second response message carrying a complexity degree of controlling the self-balanced vehicle to park; and
   a parking-determining sub-module configured to, if the complexity degree carried in the second response message received by the receiving sub-module is smaller than a preset complexity threshold, determine that the surveillance camera device can control the self-balanced vehicle to park.

In an embodiment, the device can further include:
a complexity determining module configured to, if the parking-determining sub-module determines that there are two or more surveillance camera devices which have permission to control the self-balanced vehicle to park, determine a complexity degree for each of the two or more surveillance camera devices;
a parking-device determining module configured to determine a surveillance camera device corresponding to a minimum value of the complexity degrees of the two or more surveillance camera devices which are determined by the complexity determining module as the surveillance camera device for controlling the self-balanced vehicle to park, and the first sending module is configured to perform the step of sending a message of requesting for parking assistance to the surveillance camera device.

In an embodiment, the first controlling module can include:
a route determining sub-module configured to determine a travelling route from the current location to the target location according to the parking instruction information in the first response message received by the first receiving module; and
a traveling sub-module configured to control the self-balanced vehicle to travel to the target location and park according to the travelling route determined by the route determining sub-module.

In an embodiment, the device can further include:
a second determining module configured to determine whether the self-balanced vehicle has arrived at the target location under the control of the first controlling module; and
a second controlling module configured to, after the second determining module determines that the self-balanced vehicle has arrived at the target location, control the self-balanced vehicle to adjust posture such that the self-balanced vehicle can park at the target location.

In an embodiment, the device can further include:
a message determining module configured to determine whether a location requesting message sent from the surveillance camera device is received; and
a first generating module configured to, if the message determining module determines that a location requesting message sent from the surveillance camera device is received, generate a location indication signal for indicating the current location of the self-balanced vehicle, the location indication signal being an acoustic signal and/or an optical signal.

According to a fourth aspect of embodiments of the present disclosure, there is provided a device for controlling a self-balanced vehicle to park, which is applied on a surveillance camera device, characterized in that the device can include:
a second receiving module configured to receive a message of requesting for parking assistance sent from a self-balanced vehicle to be parked;
a location determining module configured to, if the second receiving module receives the message of requesting for parking assistance, determine a current location of the self-balanced vehicle and a target location of the self-balanced vehicle;
a second generating module configured to, according to the current location of the self-balanced vehicle and the target location of the self-balanced vehicle which are determined by the location determining module, generate parking instruction information for controlling the self-balanced vehicle to travel from the current location to the target location; and
a second sending module configured to send a first response message to the self-balanced vehicle, the first response message carrying the parking instruction information generated by the second generating module such that the self-balanced vehicle can park according to the parking instruction information.

In an embodiment, the location determining module can include:
a first analyzing sub-module configured to, if the second receiving module receives the message of requesting for parking assistance, determine whether a current surveillance image of the surveillance camera device presents the self-balanced vehicle;
a first current-location determining sub-module configured to, if the first analyzing sub-module determines that the current surveillance image presents the self-balanced vehicle, determine the current location of the self-balanced vehicle according to the current surveillance image;
a first capturing sub-module configured to, if the first analyzing sub-module determines that the current surveillance image does not present the self-balanced vehicle, control an image capturing apparatus of the surveillance camera device to rotate within a preset range, and to stop rotating when a target surveillance image presenting the self-balanced vehicle is captured; and
a second current-location determining sub-module configured to determine the current location of the self-balanced vehicle according to the target surveillance image captured by the image capturing apparatus controlled by the first capturing sub-module.

In an embodiment, the location determining module can include:
a second analyzing sub-module configured to, if the second receiving module receives the message of requesting for parking assistance, determine whether a current surveillance image of the surveillance camera device presents a target parking spot for the self-balanced vehicle to park;
a first target-location determining sub-module configured to, if the second analyzing sub-module determines that the current surveillance image presents a target parking spot for the self-balanced vehicle to park, determine the target location of the self-balanced vehicle according to the target parking spot in the current surveillance image;
a second capturing sub-module configured to, if the second analyzing sub-module determines that the current surveillance image does not present a target parking spot for the self-balanced vehicle to park, control an image capturing apparatus of the surveillance camera device to rotate within a preset range, and to stop rotating when a target surveillance image presenting a target parking spot is captured; and
a second target-location determining sub-module configured to determine the target location of the self-balanced vehicle according to the target surveillance image captured by the image capturing apparatus controlled by the second capturing sub-module.

In an embodiment, the location determining module can include:
a second sending sub-module configured to, if the second receiving module receives the message of requesting for parking assistance, send a location requesting message to the self-balanced vehicle;
a signal capturing sub-module configured to, when the self-balanced vehicle generates a location indication signal according to the location requesting message sent by the second sending sub-module, control a signal capturing apparatus of the surveillance camera device to capture the location indication signal, the location indication signal being an acoustic signal and/or an optical signal; and
a third current-location determining sub-module configured to determine the current location of the self-balanced vehicle according to the location indication signal captured by the signal capturing apparatus controlled by the signal capturing sub-module.

In an embodiment, the device can further include:
a third receiving module configured to receive an inquiry message sent from the self-balanced vehicle, the inquiry message being for inquiring of the surveillance camera device about whether the surveillance camera device can control the self-balanced vehicle to park;
a third determining module configured to, according to the inquiry message received by the third receiving module, determine whether the surveillance camera device can determine a current location of the self-balanced vehicle and a target location of a target parking spot for the self-balanced vehicle to park;
a fourth determining module configured to, if the third determining module determines that the surveillance camera device can determine a current location of the self-balanced vehicle and a target location of a target parking spot for the self-balanced vehicle to park, determine a complexity degree of controlling the self-balanced vehicle to park; and
a third sending module configured to send a second response message to the self-balanced vehicle, the second response message carrying the complexity degree of controlling the self-balanced vehicle to park which is determined by the fourth determining module.

In an embodiment, the location determining module can include:
a third target-location determining sub-module configured to, if the third determining module determines that the surveillance camera device searches out more than one target parking spot for the self-balanced vehicle to park, determine a target parking spot corresponding to a minimum value of the complexity degrees of controlling the self-balanced vehicle to park as the target parking spot for the self-balanced vehicle to park, and determine the target location according to the target parking spot.

The technical solution according to embodiments of the present disclosure may have the following beneficial effects. When the self-balanced vehicle is required to be parked, the self-balanced vehicle can send a message of requesting for parking assistance to a surveillance camera device that can control the self-balanced vehicle to park. When the self-balanced vehicle receives a first response message returned from the surveillance camera device, the surveillance camera device can automatically parse parking instruction information from the first response message to control the self-balanced vehicle to travel from a current location to a target location. Thereby, it can ensure that even if no one can timely come to the location of the self-balanced vehicle, the self-balanced vehicle will not fall down. Therefore, it can solve the problem in the related art that the self-balanced vehicle requires human assistance to be parked, and it can improve the user experience of the self-balanced vehicle.

Moreover, the self-balanced vehicle can indicate its current location to the surveillance camera device by emitting a location indication signal. It can solve the problem when the self-balanced vehicle is currently located at a dim place such that the surveillance camera device cannot control the self-balanced vehicle to park. Therefore, it can improve the successful chance of controlling the self-balanced vehicle to park by the surveillance camera device.

By adjusting posture of the self-balanced vehicle arriving at the target location such that the self-balanced vehicle can park at the target location, it can solve the problem that the self-balanced vehicle may fall down as its gravity center is not laid on the parking spot.

The self-balanced vehicle can determine whether the surveillance camera device has permission to control the self-balanced vehicle to park by searching a preset control list. Then, an inquiry message is sent to the surveillance camera device which has permission to control the self-balanced vehicle to park. It can avoid establishing short-distance communication connection with a surveillance camera device which has no permission to control the self-balanced vehicle to park. Therefore, it can improve the efficiency of parking the self-balanced vehicle.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flowchart illustrating a method for controlling a self-balanced vehicle to park according to an exemplary embodiment.
Fig. 1B is a schematic diagram illustrating a method for controlling a self-balanced vehicle to park according to an exemplary embodiment.
Fig. 2 is a flowchart illustrating a method for controlling a self-balanced vehicle to park according to a first exemplary embodiment.
Fig. 3 is a flowchart illustrating a method for controlling a self-balanced vehicle to park according to a second exemplary embodiment.
Fig. 4 is a flowchart illustrating a method for controlling a self-balanced vehicle to park according to a third exemplary embodiment.
Fig. 5 is a flowchart illustrating a method for controlling a self-balanced vehicle to park according to a fourth exemplary embodiment.
Fig. 6 is a block diagram illustrating a device for controlling a self-balanced vehicle to park according to an exemplary embodiment.
Fig. 7 is a block diagram illustrating another device for controlling a self-balanced vehicle to park according to an exemplary embodiment.
Fig. 8 is a block diagram illustrating still another device for controlling a self-balanced vehicle to park according to an exemplary embodiment.
Fig. 9 is a block diagram illustrating a device for controlling a self-balanced vehicle to park according to an exemplary embodiment.
Fig. 10 is a block diagram illustrating another device for controlling a self-balanced vehicle to park according to an exemplary embodiment.
Fig. 11 is a block diagram illustrating still another device for controlling a self-balanced vehicle to park according to an exemplary embodiment.
Fig. 12 is a block diagram illustrating a device for controlling a self-balanced vehicle to park according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

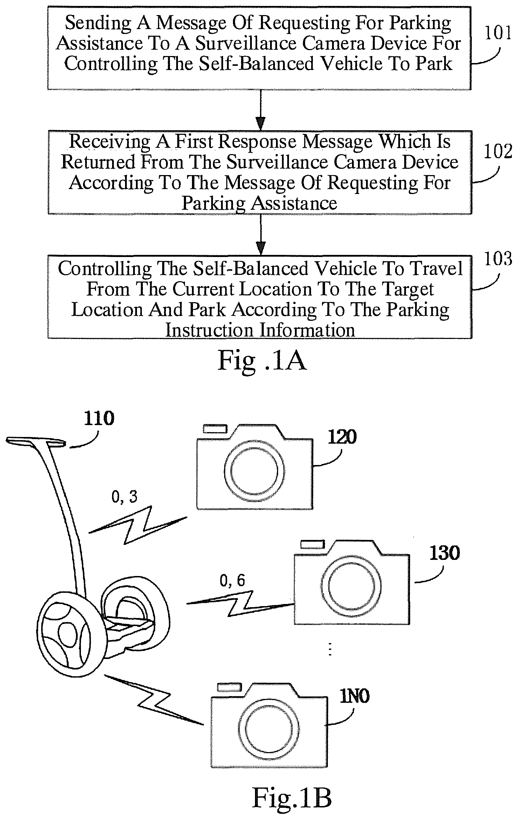

Fig. 1A is a flowchart illustrating a method for controlling a self-balanced vehicle to park according to an exemplary embodiment. Fig. 1B is a schematic diagram illustrating a method for controlling a self-balanced vehicle to park according to an exemplary embodiment. The method for controlling a self-balanced vehicle to park can be applied on the self-balanced vehicle. As shown in Fig. 1A, the method for controlling a self-balanced vehicle to park includes the following steps.

At step 101, a message of requesting for parking assistance is sent to a surveillance camera device for controlling the self-balanced vehicle to park.

In an embodiment, when the self-balanced vehicle is triggered to be turned off, since there may be no spot for the self-balanced vehicle to lean on at a current location of the self-balanced vehicle, the self-balanced vehicle can send a message of requesting for parking assistance through a communication module to a surveillance camera device for controlling the self-balanced vehicle to park.

At step 102, a first response message is received which is returned from the surveillance camera device according to the message of requesting for parking assistance.

In an embodiment, the first response message can carry parking instruction information. In an embodiment, the parking instruction information is used for controlling the self-balanced vehicle to travel from a current location to a target location.

At step 103, the self-balanced vehicle is controlled to travel from the current location to the target location and to park according to the parking instruction information.

In an embodiment, a traveling route from the current location to the target location can be determined according to the parking instruction information, to control the self-balanced vehicle to travel to the target location according to the traveling route and to park.

In an exemplary scenario, as shown in Fig. 1B, in the ambient embodiment of a self-balanced vehicle 110, there are a surveillance camera device 120, a surveillance camera device 130 and a surveillance camera device 1N0 (where N is a natural number). When the self-balanced vehicle 110 is required to be parked, the self-balanced vehicle 110 can select a surveillance camera device to assist itself to park according to a complexity degree of traveling to the target location that each of the surveillance camera devices provides. For example, if the surveillance camera device 120 provides the lowest complexity degree of traveling to the target location, the self-balanced vehicle 110 can determine to use the surveillance camera device 120 to assist itself to park according to the complexity degree. Then, the self-balanced vehicle 110 can establish a preset type of short-distance communication connection with the surveillance camera device 120 and inquiry about whether the surveillance camera device 120 can control the current self-balanced vehicle 110 to park. If the self-balanced vehicle 110 determines that the surveillance camera device 120 can control the self-balanced vehicle 110 to park, the self-balanced vehicle 110 can send to the surveillance camera device 120 a message of requesting for parking assistance. Further, the self-balanced vehicle 110 can automatically travel to the target location and park according to the parking instruction information in the first response message returned by the surveillance camera device. In an embodiment, the complexity degree indicates a complexity degree of the self-balanced vehicle travelling from the current location to the target location.

In the present embodiment, when the self-balanced vehicle is required to be parked, the self-balanced vehicle can send a message of requesting for parking assistance to a surveillance camera device that can control the self-balanced vehicle to park. When the self-balanced vehicle receives a first response message returned from the surveillance camera device, the surveillance camera device can automatically parse parking instruction information from the first response message to control the self-balanced vehicle to travel from a current location to a target location. Thereby, it can ensure that even if no one can timely come to the location of the self-balanced vehicle, the self-balanced vehicle will not fall down. Therefore, it can solve the problem in the related art that the self-balanced vehicle requires human assistance to be parked, and it can improve the user experience of the self-balanced vehicle.

In an embodiment, before the step of sending a message of requesting for parking assistance to a surveillance camera device for controlling the self-balanced vehicle to park, the method can include the following step:
determining whether there is a surveillance camera device that can establish a preset type of short-distance communication connection with the self-balanced vehicle; and
if there is a surveillance camera device that can establish a preset type of short-distance communication connection with the self-balanced vehicle, determining whether the surveillance camera device can control the self-balanced vehicle to park.

In an embodiment, determining whether the surveillance camera device can control the self-balanced vehicle to park can include:
determining whether the surveillance camera device has permission to control the self-balanced vehicle to park by searching a preset control list for recording surveillance camera devices which have permission to control the self-balanced vehicle to park;
if it is determined that the surveillance camera device has permission to control the self-balanced vehicle to park, sending an inquiry message to a surveillance camera device, the inquiry message being for inquiring of the surveillance camera device about whether the surveillance camera device can control the self-balanced vehicle to park;
receiving a second response message which is returned by the surveillance camera device according to the inquiry message, the second response message carrying a complexity degree of controlling the self-balanced vehicle to park; and
if the complexity degree is smaller than a preset complexity threshold, determining that the surveillance camera device can control the self-balanced vehicle to park.

In an embodiment, the method can further include the following steps:
if there are two or more surveillance camera devices which have permission to control the self-balanced vehicle to park, determining a complexity degree for each of the two or more surveillance camera devices;
determining a surveillance camera device corresponding to a minimum value of the complexity degrees of the two or more surveillance camera devices as the surveillance camera device for controlling the self-balanced vehicle to park, and performing the step of sending a message of requesting for parking assistance to the surveillance camera device.

In an embodiment, the method can further include the following steps:
determining whether the self-balanced vehicle has arrived at the target location; and
after it is determined that the self-balanced vehicle has arrived at the target location, controlling the self-balanced vehicle to adjust posture such that the self-balanced vehicle can park at the target location.

In an embodiment, the method can further include the following steps:
determining whether a location requesting message sent from the surveillance camera device is received; and
if a location requesting message sent from the surveillance camera device is received, generating a location indication signal for indicating the current location of the self-balanced vehicle, the location indication signal being an acoustic signal and/or an optical signal.

Accordingly, with the above method provided by the embodiments of the present disclosure, it can eliminate the need for human assistance to park the self-balanced vehicle, and only a surveillance camera device for controlling the self-balanced vehicle to park is needed. The self-balanced vehicle can automatically park according to the parking instruction information of the surveillance camera device. Therefore, it can ensure that the self-balanced vehicle does not fall down when being turned off.

The technical solution provided by the embodiments of the present disclosure will be illustrated with reference to specific embodiments below.

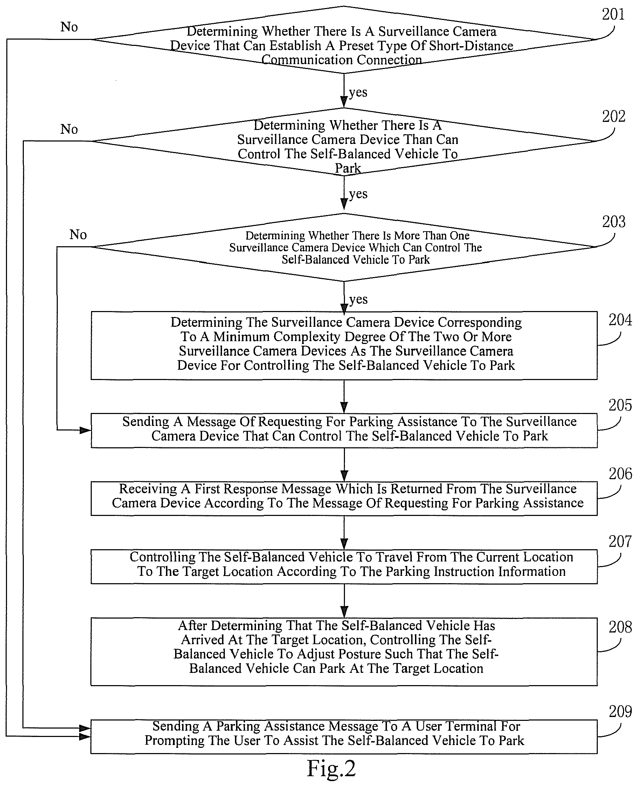

Fig. 2 is a flowchart illustrating a method for controlling a self-balanced vehicle to park according to a first exemplary embodiment. In the present embodiment, for example, the process of automatically parking the self-balanced vehicle through the above method provided by the embodiment of the present disclosure is illustrated. As shown in Fig. 2, the method for controlling a self-balanced vehicle to park includes the following steps.

At step 201, it is determined whether there is a surveillance camera device that can establish a preset type of short-distance communication connection.

In an embodiment, the preset type of short-distance communication connection can be determined by the communication module embedded in the self-balanced vehicle. In an embodiment, the preset type can be Blue Tooth, Wireless Fidelity (WiFi), Local Area Network, ZigBee protocol, Near Field Communication (NFC) or the like.

In an embodiment, when the self-balanced vehicle is required to be parked, it can be determined through detection whether currently there is a surveillance camera device that can establish a preset type of short-distance communication connection. For example, a Blue Tooth module can be controlled to detect whether currently there is a surveillance camera device that can establish a Blue Tooth connection currently.

If currently there is a surveillance camera device that can establish a preset type of short-distance communication connection, the process is turned to step 202, otherwise the process is turned to step 209.

At step 202, it is determined whether there is a surveillance camera device than can control the self-balanced vehicle to park. If there is a surveillance camera device than can control the self-balanced vehicle to park, the process is turned to step 203, otherwise the process is turned to step 209.

In an embodiment, if a surveillance camera device has a permission to control the self-balanced vehicle and can determine the current location of the self-balanced vehicle and the target location for the self-balanced vehicle to park, it can be determined that the surveillance camera device can control the self-balanced vehicle to park.

In an embodiment, the surveillance camera device can determine the current location of the self-balanced vehicle through a surveillance image. In another embodiment, the surveillance camera device can also prompt the self-balanced vehicle to emit a location indication signal, and then the surveillance camera device can determine the current location of the self-balanced vehicle according to the location indication signal. For example, when the self-balanced vehicle is currently located at a dim place and the surveillance camera device fails to acquire the current location of the self-balanced vehicle, the surveillance camera device can prompt the self-balanced vehicle to emit a location indication signal for the surveillance camera device to determine the current location of the self-balanced vehicle. In an embodiment, the location indication signal can be an acoustic signal and/or an optical signal.

In an embodiment, the surveillance camera device can determine the target location of the self-balanced vehicle according to a surveillance image.

In an embodiment, after the surveillance camera device determines the current location and the target location of the self-balanced vehicle, it can be calculated a complexity degree of the self-balanced vehicle travelling from the current location to the target location. If it is determined that there is no target location for the self-balanced vehicle to park, the complexity degree can be set up to a value exceeding a preset complexity threshold, and the complexity degree is sent to the self-balanced vehicle through a response message. Then, the self-balanced vehicle can determine whether the surveillance camera device can control the self-balanced vehicle to park depending on whether the complexity degree exceeds the preset complexity threshold. In an embodiment, if the complexity degree is larger than the preset complexity threshold, the surveillance camera device cannot control the self-balanced vehicle to park; if the complexity degree is smaller than the preset complexity threshold, the surveillance camera device can control the self-balanced vehicle to park.

At step 203, it is determined whether there are two or more surveillance camera devices which can control the self-balanced vehicle to park. If there are two or more surveillance camera devices which can control the self-balanced vehicle to park, the process is turned to step 204, otherwise, if there is one surveillance camera device which can control the self-balanced vehicle to park, the process is turned to step 205.

At step 204, the surveillance camera device corresponding to a minimum complexity degree of the two or more surveillance camera devices is determined as the surveillance camera device for controlling the self-balanced vehicle to park, and the process is turned to step 205.

In an embodiment, the self-balanced vehicle can send an inquiry message to a surveillance camera device. The inquiry message is used for inquiring of the surveillance camera device about whether the surveillance camera device can control the self-balanced vehicle to park. Then, a second response message returned by the surveillance camera device according to the inquiry message is received. The complexity degree of controlling the self-balanced vehicle to park is parsed from the second response message. When the complexity degree is smaller than the preset complexity threshold, it can be determined that the surveillance camera device can control the self-balanced vehicle to park.

In an embodiment, if the complexity degree is smaller than the preset complexity threshold, it can be determined that the corresponding surveillance camera device can control the self-balanced vehicle to park; if the complexity degree is not smaller than the preset complexity threshold, it can be determined that the corresponding surveillance camera device cannot control the self-balanced vehicle to park.

In another embodiment, if currently there are two or more surveillance camera devices which can control the self-balanced vehicle to park, the surveillance camera device corresponding to a minimum complexity degree of the two or more surveillance camera devices is determined as the surveillance camera device for controlling the self-balanced vehicle to park.

At step 205, a message of requesting for parking assistance is sent to the surveillance camera device that can control the self-balanced vehicle to park.

In an example, around the self-balanced vehicle there are two surveillance camera devices having permission to control the self-balanced vehicle to park. As shown in Fig. 1B, a complexity degree of the self-balanced vehicle travelling to a target location provided by the surveillance camera device 120 is 0.3, and a complexity degree of the self-balanced vehicle travelling to a target location provided by the surveillance camera device 130 is 0.6. In order to improve the reliability of the self-balanced vehicle successful park, the surveillance camera device 120 can be selected to assist the self-balanced vehicle to park. Then, a message of requesting for parking assistance is sent to the surveillance camera device 120.

At step 206, a first response message is received which is returned from the surveillance camera device according to the message of requesting for parking assistance.

In an embodiment, the first response message can carry parking instruction information. The parking instruction information is used for controlling the self-balanced vehicle to travel from the current location to the target location.

At step 207, the self-balanced vehicle is controlled to travel from the current location to the target location according to the parking instruction information.

At step 208, after it is determined that the self-balanced vehicle has arrived at the target location, the self-balanced vehicle is controlled to adjust posture such that the self-balanced vehicle can park at the target location.

In an embodiment, after the self-balanced vehicle arrives at the target location, the current gravity center of the self-balanced vehicle may be not laid on the target parking spot. In this case, the self-balanced vehicle can finely adjust the current posture to lay its gravity center on the target parking spot.

At step 209, a parking assistance message is sent to a user terminal for prompting the user to assist the self-balanced vehicle to park.

In an embodiment, the self-balanced vehicle can also emit a prompting signal such as sound or light to prompt a user nearby to manually park the self-balanced vehicle.

Based on the beneficial technical effects of the above embodiments, the present embodiment also has the following beneficial technical effects. The self-balanced vehicle can indicate its current location to the surveillance camera device by emitting a location indication signal. It can solve the problem when the self-balanced vehicle is currently located at a dim place and the surveillance camera device cannot control the self-balanced vehicle to park. Therefore, it can improve the successful chance of controlling the self-balanced vehicle to park by the surveillance camera device. By adjusting posture, it can solve the problem that the self-balanced vehicle may fall down as its gravity center is not laid on the parking spot. Therefore, it can improve the reliability of successfully parking the self-balanced vehicle.

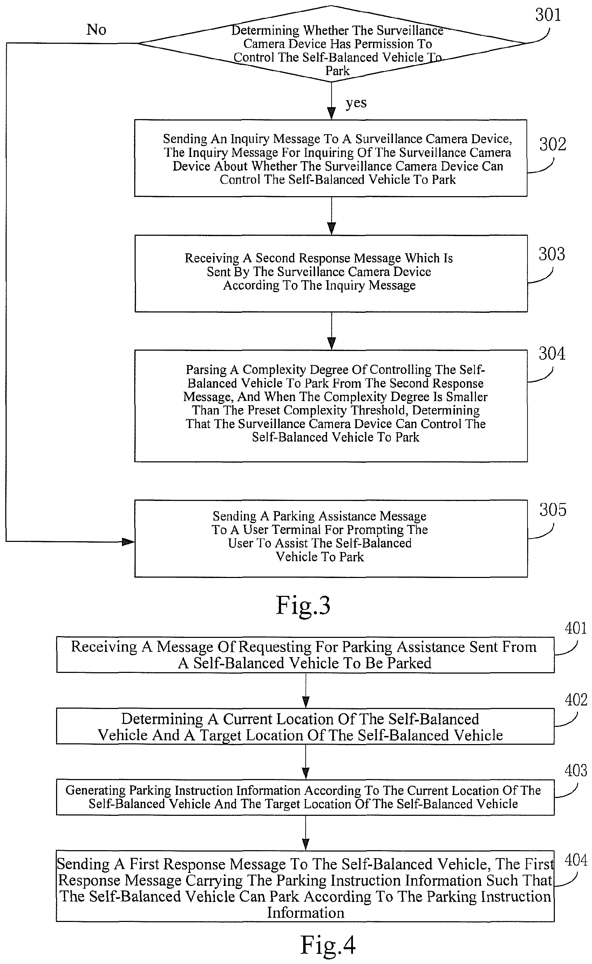

Fig. 3 is a flowchart illustrating a method for controlling a self-balanced vehicle to park according to a second exemplary embodiment. In the present embodiment, for example, the process of the self-balanced vehicle determining whether the surveillance camera device can control the self-balanced vehicle to park through the above method provided by the embodiment of the present disclosure is illustrated. As shown in Fig. 3, the method includes the following steps.

At step 301, it is determined whether the surveillance camera device has permission to control the self-balanced vehicle to park by searching a preset control list. If the surveillance camera device has permission to control the self-balanced vehicle to park, the process is turned to step 302; otherwise the process is turned to step 305.

In an embodiment, the preset control list is used for recording surveillance camera devices which have permission to control the self-balanced vehicle to park. The self-balanced vehicle can determine by detection a surveillance camera device which can currently establish a preset type of short-distance communication connection. After that, the self-balanced vehicle can search in the preset control list to see whether the surveillance camera device which can currently establish the preset type of short-distance communication connection can control the self-balanced vehicle to park.

In an embodiment, the user can previously make the self-balanced vehicle as corresponding to surveillance camera devices which can control the self-balanced vehicle to park, and create the preset control list in the self-balanced vehicle.

At step 302, an inquiry message is sent to a surveillance camera device, the inquiry message for inquiring of the surveillance camera device about whether the surveillance camera device can control the self-balanced vehicle to park.

At step 303, it is received a second response message which is sent by the surveillance camera device according to the inquiry message.

At step 304, a complexity degree of controlling the self-balanced vehicle to park is parsed from the second response message, and when the complexity degree is smaller than the preset complexity threshold, it is determined that the surveillance camera device can control the self-balanced vehicle to park.

At step 305, a parking assistance message is sent to a user terminal for prompting the user to assist the self-balanced vehicle to park.

In an embodiment, the self-balanced vehicle can also emit a prompting signal such as sound or light to prompt a user nearby to manually park the self-balanced vehicle.

Based on the beneficial technical effects of the above embodiments, the present embodiment also has the following beneficial technical effects. The self-balanced vehicle can determine whether the surveillance camera device has permission to control the self-balanced vehicle to park by searching a preset control list. Then, an inquiry message is sent to the surveillance camera device which has permission to control the self-balanced vehicle to park. It can avoid establishing short-distance communication connection with a surveillance camera device which has no permission to control the self-balanced vehicle to park. Therefore, it can improve the efficiency of parking the self-balanced vehicle.

Fig. 4 is a flowchart illustrating a method for controlling a self-balanced vehicle to park according to a third exemplary embodiment. The method for controlling a self-balanced vehicle to park can be applied on a surveillance camera device. As shown in Fig. 4, the method for controlling a self-balanced vehicle to park includes the following steps.

At step 401, it is received a message of requesting for parking assistance sent from a self-balanced vehicle to be parked.

At step 402, a current location of the self-balanced vehicle and a target location of the self-balanced vehicle are determined.

In an embodiment, an imaging apparatus of the surveillance camera device can be controlled to acquire a surveillance image presenting the self-balanced vehicle, and to process the surveillance image to determine the current location of the self-balanced vehicle. In another embodiment, a signal acquiring apparatus of the surveillance camera device can be controlled to acquire the location indication signal emitted by the self-balanced vehicle, and process the acquired location indication signal to determine the current location of the self-balanced vehicle.

In an embodiment, the imaging apparatus of the surveillance camera device can be controlled to acquire a surveillance image presenting a target parking spot for parking the self-balanced vehicle, and process the surveillance image to determine the target location of the self-balanced vehicle.

In an embodiment, the target parking spot in the present disclosure can be a portion on a target object which the self-balanced vehicle can lean on (or against). In an embodiment, the target object can be a wall, a cabinet with a fixed location, or other object with a temporarily fixed location which the self-balanced vehicle can lean on. It should be understood by those skilled in the art that, the specific location of the parking spot is not limited by the present disclosure.

In an embodiment, if a surveillance camera device has permission to control the self-balanced vehicle and can determine the current location of the self-balanced vehicle and the target location for the self-balanced vehicle to lean on, it can be determined that the surveillance camera device can control the self-balanced vehicle to park.

In an embodiment, if the self-balanced vehicle can travel to a location where there is a target parking spot for the self-balanced vehicle to lean on and there is enough room to accommodate the self-balanced vehicle at the target parking spot, the location of the target parking spot is the target location for the self-balanced vehicle to park.

In an embodiment, if more than one target parking spot for the self-balanced vehicle to park can be determined according to the surveillance image acquired by the image capturing apparatus, complexity degrees of the self-balanced vehicle travelling to the parking spots can be calculated and a target parking spot corresponding to a minimum value of the complexity degrees can be determined as the target parking spot of the self-balanced vehicle.

In another embodiment, if more than one target parking spot for the self-balanced vehicle to park can be determined according to a surveillance image acquired by an image capturing apparatus, the parking spot can be also determined according to reliability of the target objects. For example, two parking spots are determined according to the surveillance image, one is a parking spot on a wall, and the other is a parking spot on a central pillar in a hall. Since it is less likely for the parking spot on the wall than for the parking spot on the central pillar in the hall to interfere with the passage of people, the parking spot on the wall can be selected as the target location of the self-balanced vehicle. The reliability level of the parking spots can be set up previously by the user according to experience.

In another embodiment, the target location of the self-balanced vehicle can be determined taking both of the reliability of the target object and the complexity degree of the self-balanced vehicle travelling to the parking spot into account.

At step 403, parking instruction information is generated according to the current location of the self-balanced vehicle and the target location of the self-balanced vehicle.

In an embodiment, the parking instruction information is used for control the self-balanced vehicle to travel from the current location to the target location. Specifically, the parking instruction information can be a route for the self-balanced vehicle to travel from the current location to the target location. For example, the parking instruction information can be "travel forward for 3 meters, turn left for 9 degrees and travel for 2 meters".

At step 404, a first response message is sent to the self-balanced vehicle, the first response message carrying the parking instruction information such that the self-balanced vehicle can park according to the parking instruction information.

In the present embodiment, the surveillance camera device can accurately determine the current location and the target location of the self-balanced vehicle according to a captured surveillance image, can accurately calculate a route for the self-balanced vehicle travelling from the current location to the target location, and then can control the self-balanced vehicle to travel from the current location to the target location and park through the parking instruction information. Therefore, it can improve the reliability of automatically parking the self-balanced vehicle. It can solve the problem that the self-balanced vehicle requires human assistance to be parked, and if no one can timely come to the location of the self-balanced vehicle, the self-balanced vehicle will fall down.

In an embodiment, the step of determining a current location of the self-balanced vehicle can include:
determining whether a current surveillance image of the surveillance camera device presents the self-balanced vehicle;
if the current surveillance image presents the self-balanced vehicle, determining the current location of the self-balanced vehicle according to the current surveillance image;
if the current surveillance image does not present the self-balanced vehicle, controlling an image capturing apparatus of the surveillance camera device to rotate within a preset range, and to stop rotating when a target surveillance image presenting the self-balanced vehicle is captured; and
determining the current location of the self-balanced vehicle according to the target surveillance image.

In an embodiment, the step of determining a target location of the self-balanced vehicle can include:
determining whether a current surveillance image of the surveillance camera device presents a target parking spot for the self-balanced vehicle to park;
if the current surveillance image presents a target parking spot for the self-balanced vehicle to park, determining the target location of the self-balanced vehicle according to the target parking spot in the current surveillance image;
if the current surveillance image does not present a target parking spot for the self-balanced vehicle to park, controlling an image capturing apparatus of the surveillance camera device to rotate within a preset range, and to stop rotating when a target surveillance image presenting a target parking spot is captured; and
determining the target location of the self-balanced vehicle according to the target surveillance image.

In an embodiment, the step of determining a current location of the self-balanced vehicle can include:
sending a location requesting message to the self-balanced vehicle;
when the self-balanced vehicle generates a location indication signal according to the location requesting message, controlling a signal capturing apparatus of the surveillance camera device to capture the location indication signal, the location indication signal being an acoustic signal and/or an optical signal; and
determining the current location of the self-balanced vehicle according to the location indication signal.

In an embodiment, the method can further include the following steps:
receiving an inquiry message sent from the self-balanced vehicle, the inquiry message being for inquiring of the surveillance camera device about whether the surveillance camera device can control the self-balanced vehicle to park;
according to the inquiry message, determining whether the surveillance camera device can determine a current location of the self-balanced vehicle and a target location of a target parking spot for the self-balanced vehicle to park;
if it is determined that the surveillance camera device can determine a current location of the self-balanced vehicle and a target location of a target parking spot for the self-balanced vehicle to park, determining a complexity degree of controlling the self-balanced vehicle to park; and
sending a second response message to the self-balanced vehicle, the second response message carrying the complexity degree of controlling the self-balanced vehicle to park.

In an embodiment, the step of determining a target location of the self-balanced vehicle can include:
if the surveillance camera device searches out more than one target parking spot for the self-balanced vehicle to park, determining a target parking spot corresponding to a minimum value of the complexity degrees of controlling the self-balanced vehicle to park as the target parking spot for the self-balanced vehicle to park, and determining the target location according to the target parking spot.

Accordingly, with the above method provided by the embodiments of the present disclosure, a route for the self-balanced vehicle travelling from the current location to the target location can be accurately calculated, and the self-balanced vehicle can be controlled to travel from the current location to the target location and to park according to the parking instruction information. Therefore, it can improve the reliability of automatically parking the self-balanced vehicle.

The technical solution provided by the embodiments of the present disclosure will be illustrated with reference to specific embodiments below.

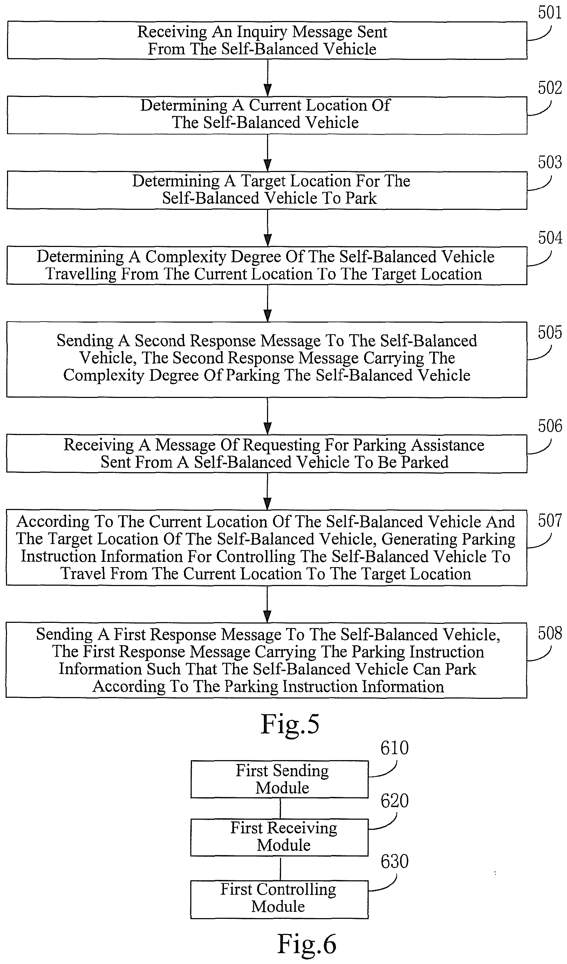

Fig. 5 is a flowchart illustrating a method for controlling a self-balanced vehicle to park according to a fourth exemplary embodiment. The method for controlling a self-balanced vehicle to park can be applied on a surveillance camera device. As shown in Fig. 5, the method for controlling a self-balanced vehicle to park includes the following steps.

At step 501, an inquiry message sent from the self-balanced vehicle is received.

In an embodiment, the inquiry message is used for inquire of the surveillance camera device about whether the surveillance camera device can control the self-balanced vehicle to park.

At step 502, a current location of the self-balanced vehicle is determined.

The current location of the self-balanced vehicle can be determined by the following three approaches.

For a first approach, if the current surveillance image presents the self-balanced vehicle, the current location of the self-balanced vehicle can be determined according to the current surveillance image.

For a second approach, if the current surveillance image does not present the self-balanced vehicle, the image capturing apparatus of the surveillance camera device can be controlled to rotate within a preset range, and stop rotating when a target surveillance image presenting the self-balanced vehicle is captured. Then, the current location of the self-balanced vehicle can be determined according to the target surveillance image.

For a third approach, a location requesting message is sent to the self-balanced vehicle and the current location of the self-balanced vehicle can be determined according to a location indication signal emitted by the self-balanced vehicle.

In an embodiment, when the self-balanced vehicle generates the location indication signal according to the location requesting message, a signal capturing apparatus of the surveillance camera device can be controlled to capture the location indication signal. The location indication signal can be an acoustic signal and/or an optical signal. Then, the current location of the self-balanced vehicle can be determined according to the location indication signal emitted by the self-balanced vehicle.

At step 503, a target location for the self-balanced vehicle to park is determined.

The target location of the self-balanced vehicle can be determined by the following three approaches.

For a first approach, if the current surveillance image presents a target parking spot for the self-balanced vehicle to park, the target location of the self-balanced vehicle is determined according to the target parking spot in the current surveillance image.

For a second approach, if the current surveillance image does not present a target parking spot for the self-balanced vehicle to park, the image capturing apparatus of the surveillance camera device is controlled to rotate within a preset range, and to stop rotating when a target surveillance image presenting a target parking spot is captured. Then, the target location of the self-balanced vehicle is determined according to the target surveillance image.

At step 504, a complexity degree of the self-balanced vehicle travelling from the current location to the target location is determined.

In an embodiment, the complexity degree of travelling to the target location can be determined according a length of a route of travelling from the current location to the target location, a number of turns in the route and the like.

At step 505, a second response message is sent to the self-balanced vehicle, the second response message carrying the complexity degree of parking the self-balanced vehicle.

At step 506, it is received a message of requesting for parking assistance sent from a self-balanced vehicle to be parked.

At step 507, according to the current location of the self-balanced vehicle and the target location of the self-balanced vehicle, parking instruction information for controlling the self-balanced vehicle to travel from the current location to the target location is generated.

At step 508, a first response message is sent to the self-balanced vehicle, the first response message carrying the parking instruction information such that the self-balanced vehicle can park according to the parking instruction information.

Based on the beneficial technical effects of the above embodiments, the present embodiment also has the following beneficial technical effects. If the surveillance camera device determines more than one parking spot for the self-balanced vehicle to park, an optimal parking spot can be determined as the target parking spot of the self-balanced vehicle according to a complexity degree of the self-balanced vehicle travelling to each of the parking spots and reliability of each of the parking spots. Therefore, it can improve the reliability of parking the self-balanced vehicle.

Corresponding to above embodiments regarding methods for controlling a self-balanced vehicle to park, the present disclosure also provides embodiments regarding devices for controlling a self-balanced vehicle to park.

Fig. 6 is a block diagram illustrating a device for controlling a self-balanced vehicle to park according to an exemplary embodiment. The device is applied on the self-balanced vehicle. As shown in Fig. 6, the device for controlling a self-balanced vehicle to park includes:
a first sending module 610 configured to send a message of requesting for parking assistance to a surveillance camera device for controlling the self-balanced vehicle to park;
a first receiving module 620 configured to receive a first response message which is returned from the surveillance camera device according to the message of requesting for parking assistance sent by the first sending module 610, the first response message carrying parking instruction information for controlling the self-balanced vehicle to travel from a current location to a target location; and
a first controlling module 630 configured to control the self-balanced vehicle to travel from the current location to the target location and park according to the parking instruction information in the first response message received by the first receiving module 620.

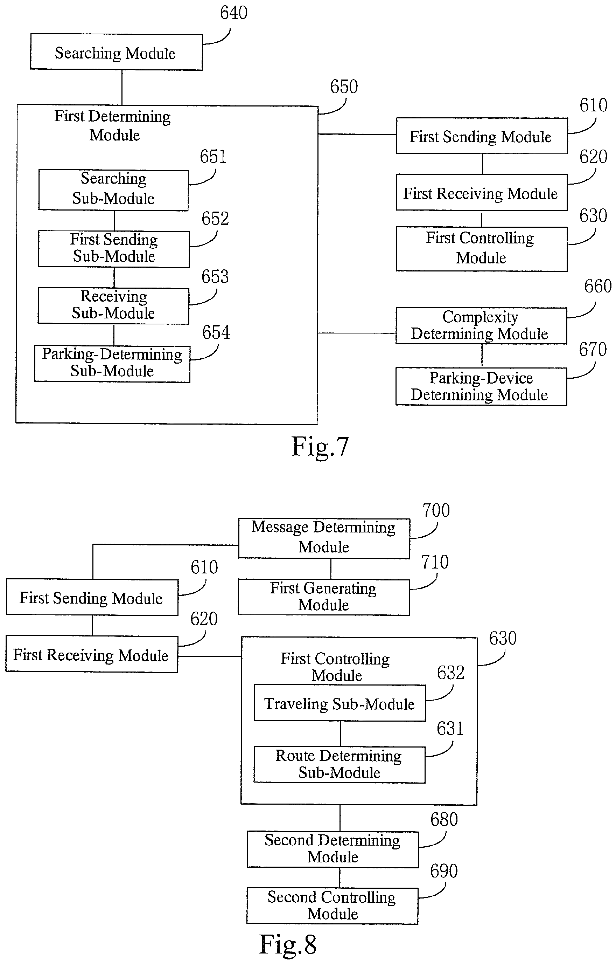

Fig. 7 is a block diagram illustrating another device for controlling a self-balanced vehicle to park according to an exemplary embodiment. As shown in Fig. 7, based on the embodiment as shown in Fig. 6, in an embodiment, the device can further include:
a searching module 640 configured to determine whether there is a surveillance camera device that can establish a preset type of short-distance communication connection with the self-balanced vehicle; and
a first determining module 650 configured to, if the searching module 640 determines that there is a surveillance camera device that can establish a preset type of short-distance communication connection with the self-balanced vehicle, determine whether the surveillance camera device can control the self-balanced vehicle to park.

In an embodiment, the first determining module 650 can include:
a searching sub-module 651 configured to, if the searching module 640 determines that there is a surveillance camera device that can establish a preset type of short-distance communication connection with the self-balanced vehicle, determine whether the surveillance camera device has permission to control the self-balanced vehicle to park by searching a preset control list for recording surveillance camera devices which have permission to control the self-balanced vehicle to park;
a first sending sub-module 652 configured to, if the searching sub-module 651 determines that the surveillance camera device has permission to control the self-balanced vehicle to park, send an inquiry message to a surveillance camera device, the inquiry message being for inquiring of the surveillance camera device about whether the surveillance camera device can control the self-balanced vehicle to park;
a receiving sub-module 653 configured to receive a second response message which is returned by the surveillance camera device according to the inquiry message sent by the first sending sub-module 652, the second response message carrying a complexity degree of controlling the self-balanced vehicle to park; and
a parking-determining sub-module 654 configured to, if the complexity degree carried in the second response message received by the receiving sub-module 653 is smaller than a preset complexity threshold, determine that the surveillance camera device can control the self-balanced vehicle to park.

In an embodiment, the device can further include:
a complexity determining module 660 configured to, if the parking-determining sub-module 654 determines that there are two or more surveillance camera devices which have permission to control the self-balanced vehicle to park, determine a complexity degree for each of the two or more surveillance camera devices;
a parking-device determining module 670 configured to determine a surveillance camera device corresponding to a minimum value of the complexity degrees of the two or more surveillance camera devices which are determined by the complexity determining module 660 as the surveillance camera device for controlling the self-balanced vehicle to park, and the first sending module 610 is configured to perform the step of sending a message of requesting for parking assistance to the surveillance camera device.

Fig. 8 is a block diagram illustrating still another device for controlling a self-balanced vehicle to park according to an exemplary embodiment. Based on the embodiment as shown in Fig. 6, in an embodiment, the first controlling module 630 can include:
a route determining sub-module 631 configured to determine a travelling route from the current location to the target location according to the parking instruction information in the first response message received by the first receiving module 620; and
a traveling sub-module 632 configured to control the self-balanced vehicle to travel to the target location and park according to the travelling route determined by the route determining sub-module 631.

In an embodiment, the device can further include:
a second determining module 680 configured to determine whether the self-balanced vehicle has arrived at the target location under the control of the first controlling module 630; and
a second controlling module 690 configured to, after the second determining module 680 determines that the self-balanced vehicle has arrived at the target location, control the self-balanced vehicle to adjust posture such that the self-balanced vehicle can park at the target location.

In an embodiment, the device can further include:
a message determining module 700 configured to determine whether a location requesting message sent from the surveillance camera device is received; and
a first generating module 710 configured to, if the message determining module 700 determines that a location requesting message sent from the surveillance camera device is received; generate a location indication signal for indicating the current location of the self-balanced vehicle, the location indication signal being an acoustic signal and/or an optical signal.

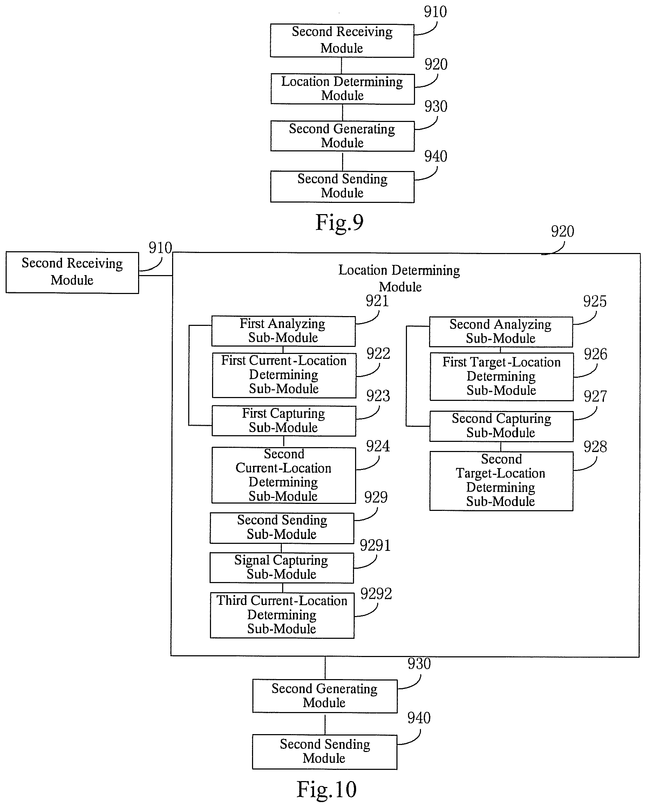

Fig. 9 is a block diagram illustrating a device for controlling a self-balanced vehicle to park according to an exemplary embodiment. The device is applied on a surveillance camera device. As shown in Fig. 9, the device for controlling a self-balanced vehicle to park can include:
a second receiving module 910 configured to receive a message of requesting for parking assistance sent from a self-balanced vehicle to be parked;
a location determining module 920 configured to, if the second receiving module 910 receives the message of requesting for parking assistance, determine a current location of the self-balanced vehicle and a target location of the self-balanced vehicle;
a second generating module 930 configured to, according to the current location of the self-balanced vehicle and the target location of the self-balanced vehicle which are determined by the location determining module 920, generate parking instruction information for controlling the self-balanced vehicle to travel from the current location to the target location; and
a second sending module 940 configured to send a first response message to the self-balanced vehicle, the first response message carrying the parking instruction information generated by the second generating module 930 such that the self-balanced vehicle can park according to the parking instruction information.

Fig. 10 is a block diagram illustrating another device for controlling a self-balanced vehicle to park according to an exemplary embodiment. As shown in Fig. 10, based on the embodiment as shown in Fig. 9, in an embodiment, the location determining module 920 can include:
a first analyzing sub-module 921 configured to, if the second receiving module 910 receives the message of requesting for parking assistance, determine whether a current surveillance image of the surveillance camera device presents the self-balanced vehicle;
a first current-location determining sub-module 922 configured to, if the first analyzing sub-module 921 determines that the current surveillance image presents the self-balanced vehicle, determine the current location of the self-balanced vehicle according to the current surveillance image;
a first capturing sub-module 923 configured to, if the first analyzing sub-module 921 determines that the current surveillance image does not present the self-balanced vehicle, control an image capturing apparatus of the surveillance camera device to rotate within a preset range, and to stop rotating when a target surveillance image presenting the self-balanced vehicle is captured; and
a second current-location determining sub-module 924 configured to determine the current location of the self-balanced vehicle according to the target surveillance image captured by the image capturing apparatus controlled by the first capturing sub-module 923.

In an embodiment, the location determining module 920 can further include:
a second analyzing sub-module 925 configured to, if the second receiving module 910 receives the message of requesting for parking assistance, determine whether a current surveillance image of the surveillance camera device presents a target parking spot for the self-balanced vehicle to park;
a first target-location determining sub-module 926 configured to, if the second analyzing sub-module 925 determines that the current surveillance image presents a target parking spot for the self-balanced vehicle to park, determine the target location of the self-balanced vehicle according to the target parking spot in the current surveillance image;
a second capturing sub-module 927 configured to, if the second analyzing sub-module 925 determines that the current surveillance image does not present a target parking spot for the self-balanced vehicle to park, control an image capturing apparatus of the surveillance camera device to rotate within a preset range, and to stop rotating when a target surveillance image presenting a target parking spot is captured; and
a second target-location determining sub-module 928 configured to determine the target location of the self-balanced vehicle according to the target surveillance image captured by the image capturing apparatus controlled by the second capturing sub-module 927.

In an embodiment, the location determining module 920 can further include:
a second sending sub-module 929 configured to, if the second receiving module 910 receives the message of requesting for parking assistance, send a location requesting message to the self-balanced vehicle;
a signal capturing sub-module 9291 configured to, when the self-balanced vehicle generates a location indication signal according to the location requesting message sent by the second sending sub-module 929, control a signal capturing apparatus of the surveillance camera device to capture the location indication signal, the location indication signal being an acoustic signal and/or an optical signal; and
a third current-location determining sub-module 9292 configured to determine the current location of the self-balanced vehicle according to the location indication signal captured by the signal capturing apparatus controlled by the signal capturing sub-module 9291.

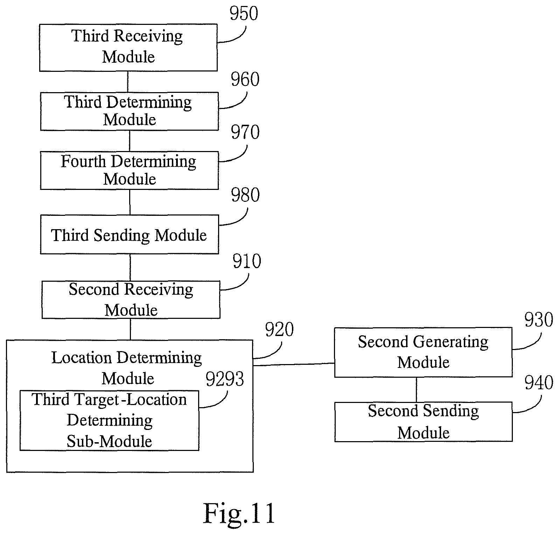

Fig. 11 is a block diagram illustrating still another device for controlling a self-balanced vehicle to park according to an exemplary embodiment. As shown in Fig. 11, based on the embodiment as shown in Fig. 9, in an embodiment, the device can further include:
a third receiving module 950 configured to receive an inquiry message sent from the self-balanced vehicle, the inquiry message being for inquiring of the surveillance camera device about whether the surveillance camera device can control the self-balanced vehicle to park;
a third determining module 960 configured to, according to the inquiry message received by the third receiving module 950, determine whether the surveillance camera device can determine a current location of the self-balanced vehicle and a target location of a target parking spot for the self-balanced vehicle to park;
a fourth determining module 970 configured to, if the third determining module 960 determines that the surveillance camera device can determine a current location of the self-balanced vehicle and a target location of a target parking spot for the self-balanced vehicle to park, determine a complexity degree of controlling the self-balanced vehicle to park; and
a third sending module 980 configured to send a second response message to the self-balanced vehicle, the second response message carrying the complexity degree of controlling the self-balanced vehicle to park which is determined by the fourth determining module 970.

In an embodiment, the location determining module 920 can include:
a third target-location determining sub-module 9293 configured to, if the third determining module 960 determines that the surveillance camera device searches out more than one target parking spot for the self-balanced vehicle to park, determine a target parking spot corresponding to a minimum value of the complexity degrees of controlling the self-balanced vehicle to park as the target parking spot for the self-balanced vehicle to park, and determine the target location according to the target parking spot.

With respect to the devices in the above embodiments, the specific manners for performing operations for individual modules therein have been described in detail in the embodiments regarding the methods, which will not be elaborated herein.

Implementation of the functions and operations of the modules in the above devices can specifically refer to the implementation of the corresponding steps in the above methods, which will not be repeated herein.

For the device embodiments, since they correspond to the method embodiments, they can refer to the related parts of the description of the method embodiments. The device embodiments described above are merely illustrative. The units described as separate may be or may not be physically separate, and the components illustrated as units may be or may not be physical units, and may be at the same location, or may be distributed to multiple units over the network. A part of or all of the modules can be selected to achieve the objective of the present disclosure as desired. One skilled in the art can understand and practice the embodiments without paying creative labor.

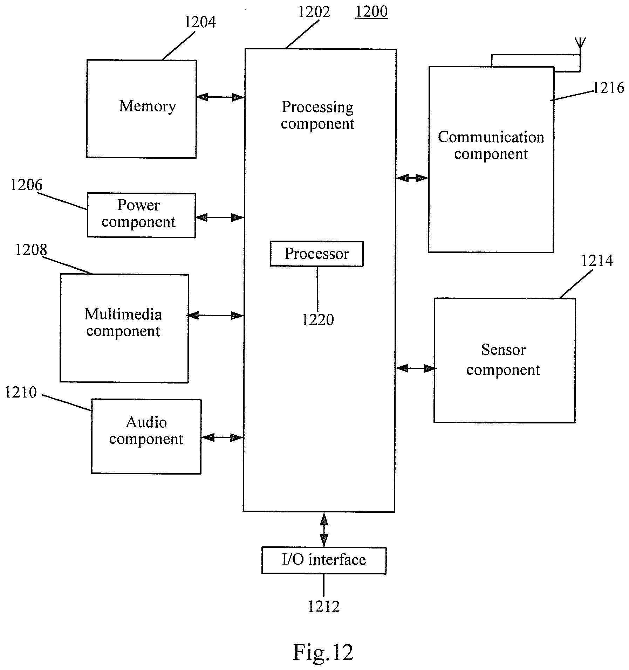

Fig. 12 is a block diagram of a device for controlling a self-balanced vehicle to park according to an exemplary embodiment. The device according to the embodiment can be applied on a self-balanced vehicle.

Referring to Fig. 12, the device 1200 can include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with data communications, camera operations, and recording operations. The processing component 1202 can include one or more processors 1220 to execute instructions to perform all or part of the steps in the above described methods. Moreover, the processing component 1202 can include one or more modules which facilitate the interaction between the processing component 1202 and other components. For instance, the processing component 1202 can include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, preset thresholds, control lists, messages, pictures, video, etc. The memory 1204 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 can include a power management system, one or more power sources, and any other components associated with the generation, management, and distribution of power in the device 1200.

The multimedia component 1208 includes a screen providing an output interface between the device 1200 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 1208 includes a front camera and/or a rear camera. The front camera and the rear camera can receive an external multimedia datum while the device 1200 is in an operation mode, such as a photographing mode or a video mode. Each of the front camera and the rear camera can be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal can be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons can include, but are not limited to, a home button, a volume button, a starting button, and a locking button.

The sensor component 1214 includes one or more sensors to provide status assessments of various aspects of the device 1200. For instance, the sensor component 1214 can detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 can include a proximity sensor configured to detect the presence of nearby objects without any physical contact. The sensor component 1214 can also include a light sensor, such as a CMOS or CCD image sensor, for use in imaging applications. In some embodiments, the sensor component 1214 can also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium are executed by the processor of the self-balanced vehicle, the self-balanced vehicle is enabled to perform a method for controlling a self-balanced vehicle to park. The method includes: sending a message of requesting for parking assistance to a surveillance camera device for controlling the self-balanced vehicle to park; receiving a first response message which is returned from the surveillance camera device according to the message of requesting for parking assistance, the first response message carrying parking instruction information for controlling the self-balanced vehicle to travel from a current location to a target location; and controlling the self-balanced vehicle to travel from the current location to the target location and to park according to the parking instruction information.

The specific structure of the surveillance camera device can refer to the block diagram as shown in Fig. 12 and corresponding description, which will not be elaborated herein.

## Claims

1. A method for controlling a self-balanced vehicle to park, which is applied on the self-balanced vehicle, **characterized in that** the method comprises the followings steps:
sending (101,205) a message of requesting for parking assistance to a surveillance camera device for controlling the self-balanced vehicle to park;
receiving (102,206) a first response message which is returned from the surveillance camera device according to the message of requesting for parking assistance, the first response message carrying parking instruction information for controlling the self-balanced vehicle to travel from a current location to a target location; and
controlling (103,207) the self-balanced vehicle to travel from the current location to the target location and to park according to the parking instruction information;
wherein, before the step of sending a message of requesting for parking assistance to a surveillance camera device for controlling the self-balanced vehicle to park, the method further comprises the following step:
determining (201) whether there is a surveillance camera device that can establish a preset type of short-distance communication connection with the self-balanced vehicle; and
if there is a surveillance camera device that can establish a preset type of short-distance communication connection with the self-balanced vehicle, determining (202) whether the surveillance camera device can control the self-balanced vehicle to park;
wherein and **characterised by** the following steps: determining whether the surveillance camera device can control the self-balanced vehicle to park comprises:
determining (301) whether the surveillance camera device has permission to control the self-balanced vehicle to park by searching a preset control list for recording surveillance camera devices which have permission to control the self-balanced vehicle to park;
if it is determined that the surveillance camera device has permission to control the self-balanced vehicle to park, sending (302) an inquiry message to a surveillance camera device, the inquiry message being for inquiring of the surveillance camera device about whether the surveillance camera device can control the self-balanced vehicle to park;
receiving (303) a second response message which is returned by the surveillance camera device according to the inquiry message, the second response message carrying a complexity degree of controlling the self-balanced vehicle to park; and
if the complexity degree is smaller than a preset complexity threshold, determining (304) that the surveillance camera device can control the self-balanced vehicle to park.

2. The method of claim 1, **characterized in that** the method further comprises the following steps:
if there are two or more surveillance camera devices which have permission to control the self-balanced vehicle to park (203), determining a complexity degree for each of the two or more surveillance camera devices;
determining (204) a surveillance camera device corresponding to a minimum value of the complexity degrees of the two or more surveillance camera devices as the surveillance camera device for controlling the self-balanced vehicle to park, and
performing the step of sending a message of requesting for parking assistance to the surveillance camera device.

3. The method of claim 1, **characterized in that** the step of controlling the self-balanced vehicle to travel from the current location to the target location and to park according to the parking instruction information comprises:
determining a travelling route from the current location to the target location according to the parking instruction information; and
controlling the self-balanced vehicle to travel to the target location and to park according to the travelling route.

4. The method of claim 1, **characterized in that** the method further comprises the following steps:
determining (208) whether the self-balanced vehicle has arrived at the target location; and
after it is determined that the self-balanced vehicle has arrived at the target location, controlling the self-balanced vehicle to adjust posture such that the self-balanced vehicle can park at the target location.

5. The method of claim 1, **characterized in that** the method further comprises the following steps:
determining whether a location requesting message sent from the surveillance camera device is received; and
if a location requesting message sent from the surveillance camera device is received, generating a location indication signal for indicating the current location of the self-balanced vehicle, the location indication signal being an acoustic signal and/or an optical signal.

6. A device for controlling a self-balanced vehicle to park, which is applied on the self-balanced vehicle, **characterized in that** the device comprises:
a first sending module (610) configured to send a message of requesting for parking assistance to a surveillance camera device for controlling the self-balanced vehicle to park;
a first receiving module (620) configured to receive a first response message which is returned from the surveillance camera device according to the message of requesting for parking assistance sent by the first sending module (610), the first response message carrying parking instruction information for controlling the self-balanced vehicle to travel from a current location to a target location; and
a first controlling module (630) configured to control the self-balanced vehicle to travel from the current location to the target location and park according to the parking instruction information in the first response message received by the first receiving module (620);
wherein the device further comprises:
a searching module (640) configured to determine whether there is a surveillance camera device that can establish a preset type of short-distance communication connection with the self-balanced vehicle; and
a first determining module (650) configured to, if the searching module determines (640) that there is a surveillance camera device that can establish a preset type of short-distance communication connection with the self-balanced vehicle, and **characterised in that** the device further comprises:
the first determining module (650) configured to determine whether the surveillance camera device can control the self-balanced vehicle to park;
wherein the first determining module (650) comprises:
a searching sub-module (651) configured to, if the searching module determines that (640) there is a surveillance camera device that can establish a preset type of short-distance communication connection with the self-balanced vehicle, determine whether the surveillance camera device has permission to control the self-balanced vehicle to park by searching a preset control list for recording surveillance camera devices which have permission to control the self-balanced vehicle to park;
a first sending sub-module (652) configured to, if the searching sub-module (651) determines that the surveillance camera device has permission to control the self-balanced vehicle to park, send an inquiry message to a surveillance camera device, the inquiry message being for inquiring of the surveillance camera device about whether the surveillance camera device can control the self-balanced vehicle to park;
a receiving sub-module (653) configured to receive a second response message which is returned by the surveillance camera device according to the inquiry message sent by the first sending sub-module (652), the second response message carrying a complexity degree of controlling the self-balanced vehicle to park; and
a parking-determining sub-module (654) configured to, if the complexity degree carried in the second response message received by the receiving sub-module (653) is smaller than a preset complexity threshold, determine that the surveillance camera device can control the self-balanced vehicle to park.

7. The device of claim 6, **characterized in that** the device further comprises:
a complexity determining module (660) configured to, if the parking-determining sub-module (654) determines that there are two or more surveillance camera devices which have permission to control the self-balanced vehicle to park, determine a complexity degree for each of the two or more surveillance camera devices;
a parking-device determining module (670) configured to determine a surveillance camera device corresponding to a minimum value of the complexity degrees of the two or more surveillance camera devices which are determined by the complexity determining module (660) as the surveillance camera device for controlling the self-balanced vehicle to park, and the first sending module (610) is configured to perform the step of sending a message of requesting for parking assistance to the surveillance camera device.

8. The device of claim 6, **characterized in that** the first controlling module (630) comprises:
a route determining sub-module (631) configured to determine a travelling route from the current location to the target location according to the parking instruction information in the first response message received by the first receiving module (620); and
a traveling sub-module (632) configured to control the self-balanced vehicle to travel to the target location and park according to the travelling route determined by the route determining sub-module (631).

9. The device of claim 6, **characterized in that** the device further comprises:
a second determining module (680) configured to determine whether the self-balanced vehicle has arrived at the target location under the control of the first controlling module (630); and
a second controlling module (690) configured to, after the second determining module (680) determines that the self-balanced vehicle has arrived at the target location, control the self-balanced vehicle to adjust posture such that the self-balanced vehicle can park at the target location.

10. The device of claim 6, **characterized in that** the device further comprises:
a message determining module (700) configured to determine whether a location requesting message sent from the surveillance camera device is received; and
a first generating module (710) configured to, if the message determining module (700) determines that a location requesting message sent from the surveillance camera device is received, generate a location indication signal for indicating the current location of the self-balanced vehicle, the location indication signal being an acoustic signal and/or an optical signal.

## Patentansprüche

1. Verfahren zur Steuerung eines selbstbalancierenden Fahrzeugs zum Parken, das auf das selbstbalancierende Fahrzeug angewendet wird, **dadurch gekennzeichnet, dass** das Verfahren die folgenden Schritte umfasst:
Senden (101, 205) einer Nachricht zum Anfordern einer Parkunterstützung an eine Überwachungskameravorrichtung zur Steuerung des selbstbalancierenden Fahrzeugs zum Parken,
Empfangen (102, 206) einer ersten Antwortnachricht, die von der Überwachungskameravorrichtung gemäß der Nachricht zum Anfordern einer Parkunterstützung zurückgesandt wird, wobei die erste Antwortnachricht Parkanweisungsinformationen zur Steuerung des selbstbalancierenden Fahrzeugs zum Fahren von einer aktuellen Position zu einer Zielposition trägt, und
Steuern (103, 207) des selbstbalancierenden Fahrzeugs zum Fahren von der aktuellen Position zu der Zielposition und zum Parken gemäß den Parkanweisungsinformationen,
wobei das Verfahren vor dem Schritt des Sendens einer Nachricht zum Anfordern einer Parkunterstützung an eine Überwachungskameravorrichtung zur Steuerung des selbstbalancierenden Fahrzeugs zum Parken ferner den folgenden Schritt umfasst:
Bestimmen (201), ob eine Überwachungskameravorrichtung vorhanden ist, die einen voreingestellten Typ einer Kurzstreckenkommunikationsverbindung mit dem selbstbalancierenden Fahrzeug herstellen kann, und
wenn eine Überwachungskameravorrichtung vorhanden ist, die einen voreingestellten Typ einer Kurzstreckenkommunikationsverbindung mit dem selbstbalancierenden Fahrzeug herstellen kann, Bestimmen (202), ob die Überwachungskameravorrichtung das selbstbalancierende Fahrzeug zum Parken steuern kann,
**dadurch gekennzeichnet, dass** das Bestimmen, ob die Überwachungskameravorrichtung das selbstbalancierende Fahrzeug zum Parken steuern kann, umfasst:
Bestimmen (301), ob die Überwachungskameravorrichtung eine Genehmigung zur Steuerung des selbstbalancierenden Fahrzeugs zum Parken aufweist, durch Durchsuchen einer voreingestellten Steuerliste zum Aufzeichnen von Überwachungskameravorrichtungen, die eine Genehmigung zur Steuerung des selbstbalancierenden Fahrzeugs zum Parken aufweisen,
wenn bestimmt wird, dass die Überwachungskameravorrichtung eine Genehmigung zur Steuerung des selbstbalancierenden Fahrzeugs zum Parken aufweist, Senden (302) einer Abfragenachricht an die Überwachungskameravorrichtung, wobei die Abfragenachricht zum Abfragen der Überwachungskameravorrichtung dazu dient, ob die Überwachungskameravorrichtung das selbstbalancierende Fahrzeug zum Parken steuern kann,
Empfangen (303) einer zweiten Antwortnachricht, die von der Überwachungskameravorrichtung gemäß der Abfragenachricht zurückgesandt wird,
wobei die zweite Antwortnachricht einen Komplexitätsgrad der Steuerung des selbstbalancierenden Fahrzeugs zum Parken trägt, und
wenn der Komplexitätsgrad kleiner als eine voreingestellte Komplexitätsschwelle ist, Bestimmen (304), dass die Überwachungskameravorrichtung das selbstbalancierende Fahrzeug zum Parken steuern kann.

2. Verfahren nach Anspruch 1, **dadurch gekennzeichnet, dass** das Verfahren ferner die folgenden Schritte umfasst:
wenn zwei oder mehr Überwachungskameravorrichtungen vorhanden sind, die eine Genehmigung zur Steuerung des selbstbalancierenden Fahrzeugs zum Parken aufweisen, Bestimmen (203) eines Komplexitätsgrads für jede von den zwei oder mehr Überwachungskameravorrichtungen,
Bestimmen (204) einer Überwachungskameravorrichtung, die einem Minimalwert der Komplexitätsgrade der zwei oder mehr Überwachungskameravorrichtungen entspricht, als die Überwachungskameravorrichtung zur Steuerung des selbstbalancierenden Fahrzeugs zum Parken, und Durchführen des Schritts des Sendens einer Nachricht zum Anfordern einer Parkunterstützung an die Überwachungskameravorrichtung.

3. Verfahren nach Anspruch 1, **dadurch gekennzeichnet, dass** der Schritt des Steuerns des selbstbalancierenden Fahrzeugs zum Fahren von der aktuellen Position zu der Zielposition und zum Parken gemäß den Parkanweisungsinformationen umfasst:
Bestimmen einer Fahrstrecke von der aktuellen Position zu der Zielposition gemäß den Parkanweisungsinformationen und
Steuern des selbstbalancierenden Fahrzeugs zum Fahren zu der Zielposition und zum Parken gemäß der Fahrstrecke.

4. Verfahren nach Anspruch 1, **dadurch gekennzeichnet, dass** das Verfahren ferner die folgenden Schritte umfasst:
Bestimmen (208), ob das selbstbalancierende Fahrzeug an der Zielposition angekommen ist, und
nachdem bestimmt wurde, dass das selbstbalancierende Fahrzeug an der Zielposition angekommen ist, Steuern des selbstbalancierenden Fahrzeugs zum Anpassen einer Stellung, so dass das selbstbalancierende Fahrzeug an der Zielposition parken kann.

5. Verfahren nach Anspruch 1, **dadurch gekennzeichnet, dass** das Verfahren ferner die folgenden Schritte umfasst:
Bestimmen, ob eine von der Überwachungskameravorrichtung gesandte Positionsanforderungsnachricht empfangen wurde, und
wenn eine von der Überwachungskameravorrichtung gesandte Positionsanforderungsnachricht empfangen wurde, Erzeugen eines Positionsangabesignals zum Angeben der aktuellen Position des selbstbalancierenden Fahrzeugs, wobei das Positionsangabesignal ein akustisches Signal und/oder ein optisches Signal ist.

6. Vorrichtung zur Steuerung eines selbstbalancierenden Fahrzeugs zum Parken, die bei dem selbstbalancierenden Fahrzeug angewendet wird, **dadurch gekennzeichnet, dass** die Vorrichtung umfasst:
ein erstes Sendemodul (610), das dazu ausgestaltet ist, eine Nachricht zum Anfordern einer Parkunterstützung an eine Überwachungskameravorrichtung zur Steuerung des selbstbalancierenden Fahrzeugs zum Parken zu senden,
ein erstes Empfangsmodul (620), das dazu ausgestaltet ist, eine erste Antwortnachricht, die von der Überwachungskameravorrichtung gemäß der Nachricht zum Anfordern einer Parkunterstützung, die von dem ersten Sendemodul (610) gesandt wird, zurückgesendet wird, zu empfangen, wobei die erste Antwortnachricht Parkanweisungsinformationen zur Steuerung des selbstbalancierenden Fahrzeugs zum Fahren von einer aktuellen Position zu einer Zielposition trägt, und
ein erstes Steuermodul (630), das dazu ausgestaltet ist, das selbstbalancierende Fahrzeug zum Fahren von der aktuellen Position zu der Zielposition und Parken gemäß den Parkanweisungsinformationen in der ersten Antwortnachricht, die von dem ersten Empfangsmodul (620) empfangen wird, zu steuern,
wobei die Vorrichtung ferner umfasst:
ein Suchmodul (640), das dazu ausgestaltet ist, zu bestimmen, ob eine Überwachungskameravorrichtung vorhanden ist, die einen voreingestellten Typ einer Kurzstreckenkommunikationsverbindung mit dem selbstbalancierenden Fahrzeug herstellen kann, und
ein erstes Bestimmungsmodul (650),
**dadurch gekennzeichnet, dass** das erste Bestimmungsmodul (650), das dazu ausgestaltet ist,
wenn das Suchmodul (640) bestimmt, dass eine Überwachungskameravorrichtung vorhanden ist, die einen voreingestellten Typ einer Kurzstreckenkommunikationsverbindung mit dem selbstbalancierenden Fahrzeug herstellen kann, zu bestimmen, ob die Überwachungskameravorrichtung das selbstbalancierende Fahrzeug zum Parken steuern kann,
wobei das erste Bestimmungsmodul (650) umfasst:
ein Suchuntermodul (651), das dazu ausgestaltet ist, wenn das Suchmodul (640) bestimmt, dass eine Überwachungskameravorrichtung vorhanden ist, die einen voreingestellten Typ einer Kurzstreckenkommunikationsverbindung mit dem selbstbalancierenden Fahrzeug herstellen kann, zu bestimmen, ob die Überwachungskameravorrichtung eine Genehmigung zur Steuerung des selbstbalancierenden Fahrzeugs zum Parken aufweist, durch Durchsuchen einer voreingestellten Steuerliste zum Aufzeichnen von Überwachungskameravorrichtungen, die eine Genehmigung zur Steuerung des selbstbalancierenden Fahrzeugs zum Parken aufweisen,
ein erstes Sendeuntermodul (652), das dazu ausgestaltet ist, wenn das Suchuntermodul (651) bestimmt, dass die Überwachungskameravorrichtung eine Genehmigung zur Steuerung des selbstbalancierenden Fahrzeugs zum Parken aufweist, eine Abfragenachricht an die Überwachungskameravorrichtung zu senden, wobei die Abfragenachricht dazu dient, die Überwachungskameravorrichtung abzufragen, ob die Überwachungskameravorrichtung das selbstbalancierende Fahrzeug zum Parken steuern kann,
ein Empfangsuntermodul (653), das dazu ausgestaltet ist, eine zweite Antwortnachricht, die von der Überwachungskameravorrichtung gemäß der Abfragenachricht, die von dem ersten Sendeuntermodul (652) gesendet wird, zurückgesendet wird, zu empfangen, wobei die zweite Antwortnachricht einen Komplexitätsgrad der Steuerung des selbstbalancierenden Fahrzeugs zum Parken trägt, und
ein Parkbestimmungsuntermodul (654), das dazu ausgestaltet ist, wenn der Komplexitätsgrad, der in der zweiten Antwortnachricht getragen wird, die von dem Empfangsuntermodul (653) empfangen wird, kleiner als eine voreingestellte Komplexitätsschwelle ist, zu bestimmen, dass die Überwachungskameravorrichtung das selbstbalancierende Fahrzeug zum Parken steuern kann.

7. Vorrichtung nach Anspruch 6, **dadurch gekennzeichnet, dass** die Vorrichtung ferner umfasst:
ein Komplexitätsbestimmungsmodul (660), das dazu ausgestaltet ist, wenn das Parkbestimmungsuntermodul (654) bestimmt, dass zwei oder mehr Überwachungskameravorrichtungen vorhanden sind, die eine Genehmigung zur Steuerung des selbstbalancierenden Fahrzeugs zum Parken aufweisen, einen Komplexitätsgrad für jede von den zwei oder mehr Überwachungskameravorrichtungen zu bestimmen,
ein Parkvorrichtungsbestimmungsmodul (670), das dazu ausgestaltet ist, eine Überwachungskameravorrichtung, die einem Minimalwert der Komplexitätsgrade der zwei oder mehr Überwachungskameravorrichtungen entspricht, die von dem Komplexitätsbestimmungsmodul (660) bestimmt werden, als die Überwachungskameravorrichtung zur Steuerung des selbstbalancierenden Fahrzeugs zum Parken zu bestimmen, und wobei das erste Sendemodul (610) dazu ausgestaltet ist, den Schritt des Sendens einer Nachricht zum Anfordern einer Parkunterstützung an die Überwachungskameravorrichtung durchzuführen.

8. Vorrichtung nach Anspruch 6, **dadurch gekennzeichnet, dass** das erste Steuermodul (630) umfasst:
ein Streckenbestimmungsuntermodul (631), das dazu ausgestaltet ist, eine Fahrstrecke von der aktuellen Position zu der Zielposition gemäß den Parkanweisungsinformationen in der ersten Antwortnachricht, die von dem ersten Empfangsmodul (620) empfangen wird, zu bestimmen, und
ein Fahruntermodul (632), das dazu ausgestaltet ist, das selbstbalancierende Fahrzeug zum Fahren zu der Zielposition und Parken gemäß der Fahrstrecke, die von dem Streckenbestimmungsuntermodul (631) bestimmt wird, zu steuern.

9. Vorrichtung nach Anspruch 6, **dadurch gekennzeichnet, dass** die Vorrichtung ferner umfasst:
ein zweites Bestimmungsmodul (680), das dazu ausgestaltet ist, zu bestimmen, ob das selbstbalancierende Fahrzeug unter der Steuerung des ersten Steuermoduls (630) an der Zielposition angekommen ist, und
ein zweites Steuermodul (690), das dazu ausgestaltet ist, nachdem das zweite Bestimmungsmodul (680) bestimmt hat, dass das selbstbalancierende Fahrzeug an der Zielposition angekommen ist, das selbstbalancierende Fahrzeug zum Anpassen einer Stellung zu steuern, so dass das selbstbalancierende Fahrzeug an der Zielposition parken kann.

10. Vorrichtung nach Anspruch 6, **dadurch gekennzeichnet, dass** die Vorrichtung ferner umfasst:
ein Nachrichtenbestimmungsmodul (700), das dazu ausgestaltet ist, zu bestimmen, ob eine Positionsanforderungsnachricht, die von der Überwachungskameravorrichtung gesendet wurde, empfangen wurde, und
ein erstes Erzeugungsmodul (710), das dazu ausgestaltet ist, wenn das Nachrichtenbestimmungsmodul (700) bestimmt, dass eine Positionsanforderungsnachricht, die von der Überwachungskameravorrichtung gesendet wurde, empfangen wurde, ein Positionsangabesignal zum Angeben der aktuellen Position des selbstbalancierenden Fahrzeugs zu erzeugen, wobei das Positionsangabesignal ein akustisches Signal und/oder ein optisches Signal ist.

## Revendications

1. Procédé destiné à commander à un véhicule gyroscopique d'effectuer une manœuvre de stationnement, lequel est appliqué au véhicule gyroscopique, **caractérisé en ce que** le procédé comprend les étapes ci-dessous consistant à :
envoyer (101, 205) un message de demande d'assistance au stationnement à un dispositif de caméra de surveillance pour commander au véhicule gyroscopique d'effectuer une manœuvre de stationnement ;
recevoir (102, 206) un premier message de réponse qui est renvoyé par le dispositif de caméra de surveillance selon le message de demande d'assistance au stationnement, le premier message de réponse transportant des informations d'instruction de stationnement pour commander au véhicule gyroscopique de se déplacer d'un emplacement en cours à un emplacement cible ; et
commander (103, 207) au véhicule gyroscopique de se déplacer de l'emplacement en cours à l'emplacement cible et d'effectuer une manœuvre de stationnement selon les informations d'instruction de stationnement ;
dans lequel, avant l'étape d'envoi d'un message de demande d'assistance au stationnement à un dispositif de caméra de surveillance pour commander au véhicule gyroscopique d'effectuer une manœuvre de stationnement, le procédé comprend en outre l'étape ci-dessous consistant à :
déterminer (201) s'il existe un dispositif de caméra de surveillance en mesure d'établir un type prédéfini de connexion de communication à courte distance avec le véhicule gyroscopique ; et
s'il existe un dispositif de caméra de surveillance en mesure d'établir un type prédéfini de connexion de communication à courte distance avec le véhicule gyroscopique, déterminer (202) si le dispositif de caméra de surveillance peut commander au véhicule gyroscopique d'effectuer une manœuvre de stationnement ;
dans lequel le procédé est **caractérisé par** les étapes ci-dessous, et dans lequel
l'étape consistant à déterminer si le dispositif de caméra de surveillance peut commander au véhicule gyroscopique d'effectuer une manœuvre de stationnement comprend les étapes ci-dessous consistant à :
déterminer (301) si le dispositif de caméra de surveillance a l'autorisation de commander au véhicule gyroscopique d'effectuer une manœuvre de stationnement, en recherchant, dans une liste de contrôle prédéfinie, des dispositifs de caméra de surveillance et d'enregistrement qui ont l'autorisation de commander au véhicule gyroscopique d'effectuer une manœuvre de stationnement ;
s'il est déterminé que le dispositif de caméra de surveillance a l'autorisation de commander au véhicule gyroscopique d'effectuer une manœuvre de stationnement, envoyer (302) un message d'interrogation à un dispositif de caméra de surveillance, le message d'interrogation étant destiné à interroger le dispositif de caméra de surveillance en ce qui concerne la capacité du dispositif de caméra de surveillance à commander au véhicule gyroscopique d'effectuer une manœuvre de stationnement ;
recevoir (303) un second message de réponse qui est renvoyé par le dispositif de caméra de surveillance conformément au message d'interrogation, le second message de réponse indiquant un degré de complexité s'agissant de commander au véhicule gyroscopique d'effectuer une manœuvre de stationnement ; et
si le degré de complexité est inférieur à un seuil de complexité prédéfini, déterminer (304) que le dispositif de caméra de surveillance est en mesure de commander au véhicule gyroscopique d'effectuer une manœuvre de stationnement.

2. Procédé selon la revendication 1, **caractérisé en ce que** le procédé comprend en outre les étapes ci-dessous consistant à :
si deux dispositifs de caméra de surveillance ou plus ont l'autorisation de commander au véhicule gyroscopique d'effectuer une manœuvre de stationnement (203), déterminer un degré de complexité pour chacun des deux dispositifs de caméra de surveillance ou plus ;
déterminer (204) un dispositif de caméra de surveillance, correspondant à une valeur minimale des degrés de complexité des deux dispositifs de caméra de surveillance ou plus, comme étant le dispositif de caméra de surveillance destiné à commander au véhicule gyroscopique d'effectuer une manœuvre de stationnement, et mettre en œuvre l'étape d'envoi d'un message de demande d'assistance au stationnement au dispositif de caméra de surveillance.

3. Procédé selon la revendication 1, **caractérisé en ce que** l'étape consistant à commander au véhicule gyroscopique de se déplacer, de l'emplacement en cours à l'emplacement cible, et d'effectuer une manœuvre de stationnement selon les informations d'instruction de stationnement, comprend les étapes ci-dessous consistant à :
déterminer un itinéraire de déplacement, de l'emplacement en cours à l'emplacement cible, selon les informations d'instruction de stationnement ; et
commander au véhicule gyroscopique de se déplacer jusqu'à l'emplacement cible et d'effectuer une manœuvre de stationnement selon l'itinéraire de déplacement.

4. Procédé selon la revendication 1, **caractérisé en ce que** le procédé comprend en outre les étapes ci-dessous consistant à :
déterminer (208) si le véhicule gyroscopique est arrivé à l'emplacement cible ; et
dès lors qu'il a été déterminé que le véhicule gyroscopique est arrivé à l'emplacement cible, commander au véhicule gyroscopique d'ajuster sa posture de sorte que le véhicule gyroscopique peut effectuer une manœuvre de stationnement à l'emplacement cible.

5. Procédé selon la revendication 1, **caractérisée en ce que** le procédé comprend en outre les étapes ci-dessous consistant à :
déterminer si un message de demande d'emplacement envoyé par le dispositif de caméra de surveillance est reçu ; et
si un message de demande d'emplacement envoyé par le dispositif de caméra de surveillance est reçu, générer un signal d'indication d'emplacement pour indiquer l'emplacement en cours du véhicule gyroscopique, le signal d'indication d'emplacement étant un signal acoustique et/ou un signal optique.

6. Dispositif destiné à commander à un véhicule gyroscopique d'effectuer une manœuvre de stationnement, lequel est appliqué au véhicule gyroscopique, **caractérisé en ce que** le dispositif comprend :
un premier module d'envoi (610) configuré de manière à envoyer un message de demande d'assistance au stationnement à un dispositif de caméra de surveillance pour commander au véhicule gyroscopique d'effectuer une manœuvre de stationnement ;
un premier module de réception (620) configuré de manière à recevoir un premier message de réponse qui est renvoyé par le dispositif de caméra de surveillance selon le message de demande d'assistance au stationnement envoyé par le premier module d'envoi (610), le premier message de réponse transportant des informations d'instruction de stationnement pour commander au véhicule gyroscopique de se déplacer d'un emplacement en cours à un emplacement cible ; et
un premier module de commande (630) configuré de manière à commander au véhicule gyroscopique de se déplacer, de l'emplacement en cours à l'emplacement cible, et d'effectuer une manœuvre de stationnement selon les informations d'instruction de stationnement contenues dans le premier message de réponse reçu par le premier module de réception (620) ;
dans lequel le dispositif comprend en outre :
un module de recherche (640) configuré de manière à déterminer s'il existe un dispositif de caméra de surveillance en mesure d'établir un type prédéfini de connexion de communication à courte distance avec le véhicule gyroscopique ; et
un premier module de détermination (650) configuré de manière à, si le module de recherche (640) détermine qu'il existe un dispositif de caméra de surveillance en mesure d'établir un type prédéfini de connexion de communication à courte distance avec le véhicule gyroscopique, déterminer si le dispositif de caméra de surveillance peut commander au véhicule gyroscopique d'effectuer une manœuvre de stationnement ; et
**caractérisé en ce que** le dispositif comprend en outre :
le premier module de détermination (650) configuré de manière à déterminer si le dispositif de caméra de surveillance peut commander au véhicule gyroscopique d'effectuer une manœuvre de stationnement ;
dans lequel le premier module de détermination (650) comprend :
un sous-module de recherche (651) configuré de manière à, si le module de recherche (640) détermine qu'un dispositif de caméra de surveillance peut établir un type prédéfini de connexion de communication à courte distance avec le véhicule gyroscopique, déterminer si le dispositif de caméra de surveillance a l'autorisation de commander au véhicule gyroscopique d'effectuer une manœuvre de stationnement, en recherchant, dans une liste de contrôle prédéfinie, des dispositifs de caméra de surveillance et d'enregistrement qui ont l'autorisation de commander au véhicule gyroscopique d'effectuer une manœuvre de stationnement ;
un premier sous-module d'envoi (652) configuré de manière à, si le sous-module de recherche (651) détermine que le dispositif de caméra de surveillance a l'autorisation de commander au véhicule gyroscopique d'effectuer une manœuvre de stationnement, envoyer un message d'interrogation à un dispositif de caméra de surveillance, le message d'interrogation étant destiné à interroger le dispositif de caméra de surveillance en ce qui concerne la capacité du dispositif de caméra de surveillance à commander au véhicule gyroscopique d'effectuer une manœuvre de stationnement ;
un sous-module de réception (653) configuré de manière à recevoir un second message de réponse qui est renvoyé par le dispositif de caméra de surveillance selon le message d'interrogation envoyé par le premier sous-module d'envoi (652), le second message de réponse indiquant un degré de complexité s'agissant de commander au véhicule gyroscopique d'effectuer une manœuvre de stationnement ; et
un sous-module de détermination de stationnement (654) configuré de manière à, si le degré de complexité indiqué dans le second message de réponse reçu par le sous-module de réception (653) est inférieur à un seuil de complexité prédéfini, déterminer que le dispositif de caméra de surveillance peut commander au véhicule gyroscopique d'effectuer une manœuvre de stationnement.

7. Dispositif selon la revendication 6, **caractérisé en ce que** le dispositif comprend en outre :
un module de détermination de complexité (660) configuré de manière à, si le sous-module de détermination de stationnement (654) détermine que deux dispositifs de caméra de surveillance ou plus ont l'autorisation de commander au véhicule gyroscopique d'effectuer une manœuvre de stationnement, déterminer un degré de complexité pour chacun des deux dispositifs de caméra de surveillance ou plus ;
un module de détermination de dispositif de stationnement (670) configuré de manière à déterminer un dispositif de caméra de surveillance, correspondant à une valeur minimale des degrés de complexité des deux dispositifs de caméra de surveillance ou plus qui sont déterminés par le module de détermination de complexité (660), comme étant le dispositif de caméra de surveillance pour commander au véhicule gyroscopique d'effectuer une manœuvre de stationnement, et dans lequel le premier module d'envoi (610) est configuré de manière à mettre en œuvre l'étape d'envoi d'un message de demande d'assistance au stationnement, au dispositif de caméra de surveillance.

8. Dispositif selon la revendication 6, **caractérisé en ce que** le premier module de commande (630) comprend :
un sous-module de détermination d'itinéraire (631) configuré de manière à déterminer un itinéraire de déplacement, de l'emplacement en cours à l'emplacement cible, selon les informations d'instruction de stationnement contenues dans le premier message de réponse reçu par le premier module de réception (620) ; et
un sous-module de déplacement (632) configuré de manière à commander au véhicule gyroscopique de se déplacer jusqu'à l'emplacement cible et d'effectuer une manœuvre de stationnement selon l'itinéraire de déplacement déterminé par le sous-module de détermination d'itinéraire (631).

9. Dispositif selon la revendication 6, **caractérisé en ce que** le dispositif comprend en outre :
un second module de détermination (680) configuré de manière à déterminer si le véhicule gyroscopique est arrivé à l'emplacement cible sous la commande du premier module de commande (630) ; et
un second module de commande (690) configuré de manière à, dès lors que le second module de détermination (680) détermine que le véhicule gyroscopique est arrivé à l'emplacement cible, commander au véhicule gyroscopique d'ajuster sa posture, de sorte que le véhicule gyroscopique peut effectuer une manœuvre de stationnement à l'emplacement cible.

10. Dispositif selon la revendication 6, **caractérisé en ce que** le dispositif comprend en outre :
un module de détermination de message (700) configuré de manière à déterminer si un message de demande d'emplacement envoyé par le dispositif de caméra de surveillance est reçu ; et
un premier module de génération (710) configuré de manière à, si le module de détermination de message (700) détermine qu'un message de demande d'emplacement envoyé par le dispositif de caméra de surveillance est reçu, générer un signal d'indication d'emplacement pour indiquer l'emplacement en cours du véhicule gyroscopique, le signal d'indication d'emplacement étant un signal acoustique et/ou un signal optique.
